# EUROPEAN PATENT APPLICATION

(11) **EP 0 890 629 A1**
(43) Date of publication of application: **13.01.1999**
(21) Application number: 98112912.5
(22) Date of filing: 10.07.1998
(51) Int. Cl.: C10B 7/10

(54) **Pyrolytic Reactor for Waste Plastic**

(30) Priority: 10.07.1997 JP 185110/97
(71) Applicant: Sinanen Co., Ltd., Tokyo 105 (JP)
(72) Inventor: Heima, Haruo, Ichikawa-shi, Chiba-ken (JP); Kitami, Yutaka, Yokohama-shi, Kanagawa-ken (JP); Tsuji, Minoru, Tokyo (JP)
(74) Representative: Müller-Boré & Partner Patentanwälte

(57) **Abstract**

The object of the present invention is to provide a pyrolytic reactor for waste plastic which is capable of pyrolyzing waste plastic continously and effectively without the need to lengthen and thus enlarge the reactor, no matter how much the amount of waste plastic treated is increased. The pyrolytic reactor for waste plastic comprising a pair of reactor shells each having a guiding means for guiding the waste plastic longitudinally and an external heating means for heating the waste plastic from outside; and a waste plastic drawing tube which connects a front end portion of one of the reactor shells to a back end portion of the other one of the reactor shells and a waste plastic return tube which connects a back end portion of the one of the reactor shells to a front end portion of the other one of the reactor shells, the direction in which the waste plastic is guided by the guiding means of the one reactor shell being opposite to the direction in which the waste plastic is guided by the guiding means of the other shell, the pair of the reactor shells cooperating with the waste plastic drawing and return tubes to form a circulating flow path for the waste plastic, the one of the reactor shells having a waste plastic inlet port at its back end portion.

## Description

This invention relates to a pyrolytic reactor for waste plastic and, more particularly, it relates to a pyrolytic reactor that can pyrolyze waste plastic continuously and effectively, without having to be lengthened, no matter how much the amount of the waste plastic treated is increased.

In recent years, increased attention has been paid to the technology of treating mixed plastic waste to produce solid fuel or oil in view of the need to reuse waste plastic. However, the chlorine contained in polyvinylchloride that is ubiquitous in waste plastic can corrode the processing apparatus for producing solid fuel or oil or can contaminate the environment.

The pyrolytic process apparatus for waste plastic utilizes a chemical process method for removing the chlorine from waste plastic in Japanese Patent Application Laid-Open HEI 5-245463, for instance. According to this apparatus, waste plastic is normally heated to a predetermined temperature, that is, about 290° C to 330° C from the outside of the reactor shell, while at the same time it is guided in the longitudinal direction within an elongated reactor shell, in order to dechlorinate the waste plastic by effectively pyrolyzing it.

In this connection, the dominant factors affecting the efficiency of pyrolytic reaction of waste plastic conducted by such an apparatus are the speed at which the waste plastic is guided, the temperature of the heat source, and the heat transfer area. Thus, the slower the guiding speed becomes, the lower the efficiency of the treatment becomes, no matter how much the heating time is increased, on the other hand, the faster the guiding speed becomes, the shorter the heating time becomes, no matter how much the efficiency of the treatment is increased.

In order to secure the amount of heating of waste plastic required for conducting the pyrolitic reaction while at the same time maintaining the efficiency of the treatment, an enlargement of the diameter of the reactor shell or the lengthening of the reactor shell can be considered if the waste plastic is heated externally to increase the heat transfer area under the condition that the temperatue of the heat source is kept constant.

Under such circumstances, the problem related to the guiding of waste plastic and the one related to the heating thereof can worsen due to the peculiar characteristic of waste plastic, particularly as the amount of waste plastic treated is increased.

With regard to the former problem, firstly, waste plastic, especially general waste plastic, has a mixed form consisting of various kinds of plastics such as polyolefin, polystyrene, and polyvinyl dichloride along with foreign objects such as glass, metal, aluminum foil and stone, and it is transformed from a fluffy-like solid state, which it has when it is initially introduced into the reactor shell, to a semi-molten state, and then amolten state as it is guided longitudinally within the reactor shell while at the same time it is heated. When the waste plastic is melted, it is extremely viscous. Accordingly, in a case where waste plastic is to be guided longitudinally within the reactor shell, an once-through way, in which waste plastic introduced into the reactor shell is guided while being heated, and then discharged from the reactor shell, tends to require a great amount of energy consumption for guiding the waste plastic, even if a number of guiding blades are attached longitudinally to the rotary shaft, for instance. This tendency becomes remarkable as the reactor shell is lengthened.

Secondly, upon waste plastic being guided, the foreign objects like glass, metal, aluminum foil and stone, etc. are likely to block the area between the guide blades and the inner surface of the reactor shell before the waste plastic is melted. Depending on the case, this may force the guiding of the waste plastic to be halted, thereby causing the treatment efficiency thereof to be reduced. The applicant of this patent application has proposed a method of sorting mixed waste plastic by utilizing the respective weights of various kinds of plastic comprising the waste plastic and/or exposing these plastics to be blown air before they are pyrolyzed, However, since such a physical sorting method has its own limits, inclusion of the foreign objects with waste plastic, in fact, cannot be avoided. This problem can be solved to some extent by enlarging the diameter of the reactor shell to keep the clearance between the guiding blades and the inner surface of the reactor shell. However, the enlargement of the diamter of the reactor shell causes the above mentioned latter problem, that is, the one related to the heating of waste plastic.

More specifically, when waste plastic is to be guided while being heated, it has to be guided longitudinally while at the same time it has to be stirred and kneaded in view of its highly viscous characteristic. This is because, since waste plastic is normally in a laminar flow state within a reactor shell unless it is stirred and kneaded, local non-uniform temperature of the waste plastic can be caused, and what is more, a decrease in the effective heat transfer area can be caused due to an insufficient amount of waste plastic contacting the inner surface of the reactor shell defining the heat transfer area, In this respect, the enlargement of the diameter of the reactor shell leads to a decreased stirring function, which impedes the effective heat transfer from heat sources to waste plastic.

In addition, regarding the problem relative to the heating of waste plastic, the present applicant has found that the fluffy-like fragmented waste plastic has an air film attached to its surface in many cases in addition to its low thermal conductivity and, this air film extremely impedes the transfer of heat to the waste plastic. In particular, in the case of external heating in which waste plastic is heated from the outside of the reactor shell, generated hydrogen chloride can cause low temperature corrosion at the interior of the reactor shell due to a decrease in the heat transfer rate caused by the presnece of the air film as well as to the extreme temperature distribution along the thickness of the reactor shell.

In this connection, the present applicant has previously proposed an internal heating method in addition to the external heating method in which internal heating method waste plastic is heated from the inside of the reactor shell. This internal heating method enables internal parts like the rotary shaft of the reactor shell and the guide blades, which the external heating means cannnot help keeping at a low temperature, to be heated from the inside of the reactor shell, thereby causing the above-described problem to be overcome to some extent.

However, in this internal heating method, since the rotary shaft is heated to about 350° C, bearings supporting the rotary shaft and shaft seal parts are heated to a high temperature, which causes a durability problem with regards to these parts.

On the other hand, it is considered that the air film attached to the waste plastic can be definitely removed by enhancing the stirring function of waste plastic by increasing the rotational speed of the rotary shaft. However, it is difficult to control the stirring function by the rotational speed of the rotary shaft.

As we have seen, the problems associated with the guiding and the heating of waste plastic can be caused due to the high viscosity and the low heat transfer rate of waste plastic, and these problems become more noticeable as the amount of waste plastic treated is increased. Fruther, to reduce cost, it would be ideal if the treatment of waste plastic on a commertial basis, in particular, dechlorinating waste plastic by pyrolytic reaction, was conducted completely automatically, or without manual labor, and enlarging of the related facilities was avoided as much as possible,

Therefore, in view of the above-described problems, the object of the present invention is to provide a pyrolytic reactor for waste plastic which is capable of pyrolyzing waste plastic continously and effectively without the need to lengthen and thus enlarge the reactor, no matter how much the amount of waste plastic treated is increased.

According to the invention, the above object is achieved by providing a pyrolytic reactor for waste plastic comprising:
a pair of reactor shells each having a guiding means for guiding the waste plastic longitudinally and an external heating means for heating the waste plastic from outside; and
a waste plastic drawing tube which connects a front end portion of one of the reactor shells to a back end portion of the other one of the reactor shells and a waste plastic return tube which connects a back end portion of the one of the reactor shells to a front end portion of the other one of the reactor shells,
the direction in which the waste plastic is guided by the guiding means of the one reactor shell being opposite to the direction in which the waste plastic is guided by the guiding means of the other shell,
the pair of the reactor shells cooperating with the waste plastic drawing and return tubes to form a circulating flow path for the waste plastic,
the one of the reactor shells having a waste plastic inlet port at its back end portion.

Preferably, the one of the reactor shells is disposed above the other of the reactor shells.

Preferably, said pyrolytic reactor further has a molten waste plastic drawing tube, a draw port of which is disposed below the one of the reactor shells, the level of the molten waste plastic drawing tube relative to that of the one of the reactor shells being controllable.

With a pyrolytic reactor for waste plastic according to the present invention, the waste plastic fed into the back end portion of one of the pair of the reactor shells through the waste plastic inlet port is guided longitudinally by a guide means toward the front end portioin of said reactor shell where the waste plastic flows into the other one of the pair of the reactor shells through a waste plastic drawing tube, and then it is oppositely guided longitudinally by the guide means from the back end portion of the other one of the pair of the reactor shells to the front end portion thereof where it is returned to the back end portion of the one of the pair of the reactor shells through the waste plastic returning tube. While the waste plastic is being circulated and guided, the waste plastic is heated by the external heating means from the outside of the pair of the reactor shells, and as a result, the waste plastic is pyrolyzed at about 280 ° C to 340° C to generate hydrogen chloride. The generated hydrogen chloride flows out of the pyrolyzed gas outlet port, while on the other hand, the molten waste plastic which has been dechlorinated is discharged outside and then transferred to a further pyrolytic process station in order to produce oil, or to a cooling process station in order to produce solid fuel.

Under such circumstances, the fluidic state of the waste plastic is improved as soon as the waste plastic is introduced into the pyrolytic reactor by mixing the molten waste plastic which flows through the waste plastic return tube with the fluffy solid waste plastic which has been just introduced, at the back end portion of the one of the pair of the reactor shells, whereby the problem related to the guiding of the waste plastic is overcome, while at the same time an effective heat transfer area is secured. In addition, the molten waste plastic forcibly removes the air film attached to the surface of the introduced waste plastic and the utilization of the heat transfer method by which the heat of the molten waste plastic is directly transferred to the waste plastic in additon to the utilization of the conduction and the convection heat transfer method prevents low temperature corrosion, and thus, based on the present invention as a whole, continuous and efficient pyrolytic reaction of the waste plastic can be achieved without needing to lengthen the reactor shell.

Now, the present invention will be described in greater detail by referring to the accompanying drawings that illustrate preferred embodiments of the invention.
FIG. 1 is a flow chart of the process of dechlorinating waste plastic by an embodiment of a pyrolytic reactor for waste plastic according to the invention.
FIG. 2 is a schematic side view of the embodiment of pyrolytic reactor for waste plastic according to the invention.
FIG. 3 is a schematic front view of the embodiment of pyrolytic reactor for waste plastic according to the invention.

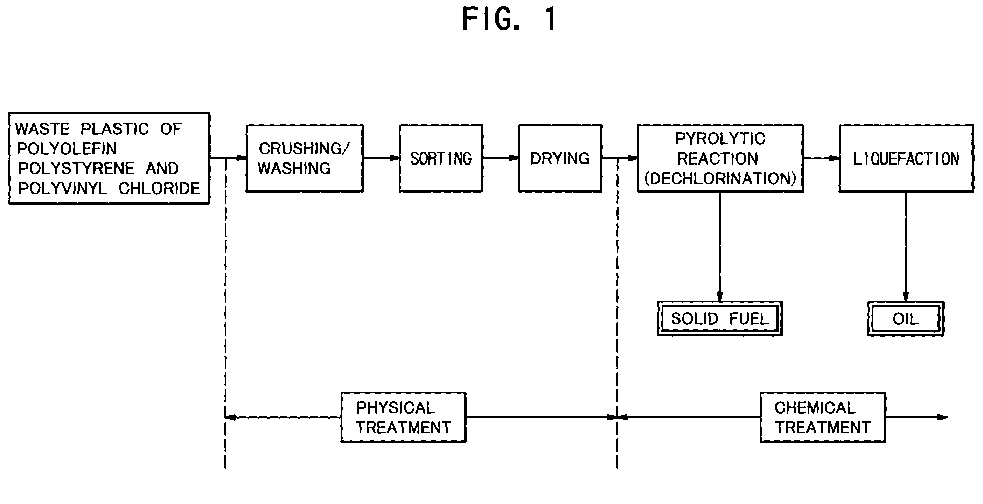

FIG. 1 is a flow chart of the process of dechlorinating waste plastic by means of an embodiment of pyrolytic reactor for waste plastic according to the invention.

In waste treatment facilities of the type under consideration, a mixture of plastic waste containing polyolefin, polystyrene and polyvinylchloride wastes is firstly subjected to a physical treatment step to remove foreign objects such as pieces of steel, polyvinylchloride and glass and aluminum foil debris as much as possible.

In this physical treatment step, waste plastic is crushed into fluffy pieces substantially having predetermined dimensions, sorted by specific gravity either after they are washed or sorted in an air flow and then dried. In a subsequent chemical treatment step, the crushed waste plastic is pyrolyzed and then dry-processed in a specific manner depending on the form of the final fuel product, which form is either oil or solid fuel. This embodiment relates to the pyrolysis of waste plastic.

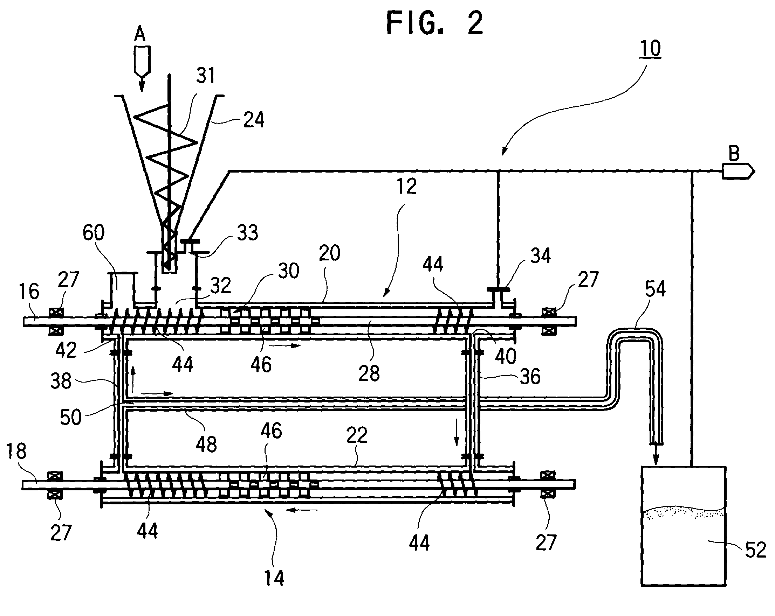

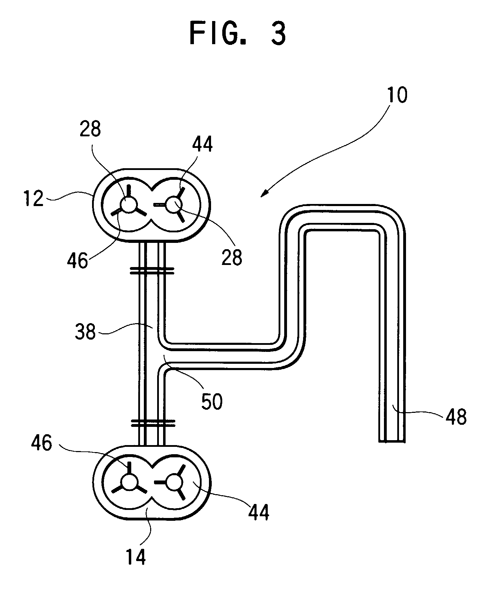

FIGs. 2 and 3 show side and front views of the embodiment, which is a pyrolytic reactor, respectively. As shown in FIG. 2, the pyrolytic reactor 10 comprises a pair of reactor shells consisting of a first reactor shell 12 and a second reactor shell 14. Guiding means 16, 18 for guiding the waste plastic in the longitudinal direction and outer heating means 20, 22 for heating the waste plastic from the outside are included in the first reactor shell 12 and the second reactor shell 14, respectively.

The first shell 12 is an elongated cylindrical vessel extending substantially horizontally and comprises a rotary shaft 28 which is supported by a bearing 27 at each end and is disposed within the first reactor shell 12, and guiding blades 30 each of which are fixed to the outer periphery of the rotary shaft 28. As clearly shown in Fig, 3, the rotary shaft 28 is of the type including two shafts which are disposed longitudinally parallel with each other within the first reactor shell 12.

The hopper 24 is of a known type and held in communication with an upper portion of one end of the first reactor shell 12 which one end is situated backward side in the direction of guiding the waste plastic. The hopper 24 has an agitator 31 in the inside thereof and a ribbon type feeder (not shown) with a water-cooled jacket which is disposed right above a waste plastic inlet port 32 of the first reactor shell 12.

The hopper 24 is designed to physically remove as much polyvinylchloride as possible, by utilizing the specific gravity thereof and/or an air flow and feed the remaining waste plastic that is made fluffy by the agitator to the first reactor shell 12 through the waste plastic inlet port 32 at a predetermined rate without causing blocking or clogging of the hopper 24.

The first reactor shell 12 is provided with a pyrolyzed gas outlet port 33 at, with reference to a direction in which the waste plastic is guided, an upper back end portion of the first reactor 12, and a pyrolyzed gas outlet port 34 atm with refenrece to a direction in which the waste plastic is guided in order for pyrolyzed gas mainly consisting of a hydrogen chloride gas produced by the pyrolysis reaction to be charged outside, an upper front end portion of the first reactor 12. The first reactor shell 12 is also provided at the front end thereof with, a drawing port 40 for a molten plastic drawing tube 36, which will be described later, and at the back end thereof, with a returning port 42 for a molten plastic returning tube 38. As indicated by the arrow in Fig. 2, this enables a certain amount of waste plastic fed from the hopper 24 to be drawn out from the outlet port 40, and then be mixed with the already pyrolyzed molten plastic which has been returned from the inlet port 42 through the second reactor shell 14, at the back end of the first reactor shell 12 to be heated by the molten plastic. Oil operating as a heat medium is made to flow through the gap between the first reactor shell 12 and the outer jacket to externally heat the waste plastic contained in the first reactor shell 12 through the thickness thereof. In other words, the outer jacket 14 operates as an outer heating means.

Screw-like blades 44 and hatchet-like blades 46 are fixed to the rotary shaft 28, to secure both the guiding and stirring functions. The screw-like blades 44 comprise a series of helical configurations and are provided at each end portion of the first and second reactor shells 12, 14 respectively, in order to enhance the guiding function sufficiently to be able to handle the increase in the amount of the waste plastic.

On the other hand, the hatchet-like blades 46 are longitudinally and securely fitted on the outer periphery of the rotary shaft 28 between the screw-like blades 44 provided on the opposite ends of the first and the second reactor shells 12, 14, so that they are adapted to be rotated about the longitudinal axis of the rotary shaft 28 by the rotation thereof, The hatchet-like blades 46, which may be of any known plate type or rod type, are arranged angularly at regular intervals around the rotary shaft 28 and secured to the outer periphery thereof by means of bolts or welding. The blades 46 are designed to satisfactorily stir and knead the molten plastic contained in the reactor shells 12, 14, and at the same time, prevent foreign objects from clogging the reactor shells 12, 14. In addition, the blades 46 are arranged aslant relative to the cross section that is perpendicular to the axis of the rotary shaft 28 in such a way that the waste plastic in the reactor shells 12, 14 is guided toward the oulet 34. While the number of the blades is either four or six in this embodiment, another appropriate number of blades may alternatively be selected depending on the amount of the waste plastic treated.

A deaeration pot 60 is provided at the back end portion of the first reactor shell 12 in order to remove bubbles of hydrogen chloride from molten plastic in view of the fact that bubbles of hydrogen chloride generated as a result of a pyrolytic reaction of waste plastic cannnot be released from the molten plastic containing them to flow out through the outlet ports 30, 33 simply by stirring and kneading the molten plastic by an enhanced rate of rotation of the hatchet-like blades because molten plastic is extremely viscous. The inside of the deaeration pot 60 contains a porous plate (not shown) through which molten plastic containing bubbles therein is forced to pass to increase the surface area of the molten plastic, whereby the molten plastic may easily release bubbles of hydrogen chloride.

Since the second reactor shell 14 is similar to the first reactor shell 12 except that the direction in which for waste plastic is guidied by the screw-like and the hachet-like blades 44, 46 is opposite to the one in the first reactor shell 12, and that the level of the second reactor shell 14 is lower than that of the first reactor shell 12 (See Fig. 3), an explanation of elements in the second reactor shell 14 similar to those of the first reactor shell 12 is omitted and such similar elements of the second shell are given the same reference numbers as those of the corresponding elements of the first reactor shell 12. The providing of the second reactor shell 14 below the first reactor shell 12 enables the total length of the waste plastic drawing tube 36 and the waste plastic returning tube 38 to be shortened as much as possible, while at the same time it enables the plane space occupied by the entire system to be reduced.

The waste plastic drawing tube 36 connects the front end of the first reactor shell 12 to the back end of the second reactor shell 14, while on the other hand, the waste plastic returning tube 38 connects the back end of the first reactor shell 12 and the front end of the second reactor shell 14, whereby a circulation path for waste plasitc is formed. This enables molten waste plastic which is returned to the first reactor shell 12 through the waste plastic return tube 38 to be mixed with the fluffy-like solid waste plastic introduced from the waste plastic inlet port 32 at the back end of the first reactor shell 12.

The waste plastic return tube 38 further includes a molten waste plastic discharge tube 48 which branches out from the tube 38 between the first reactor shell 12 and the second reactor shell 14. The molten discharge tube 48 extends substantially horizontally from a drawing port 50 situated below the level of the first reactor shell 12, and rises to the same level as that of the first reactor shell 12 immediately before a waste plastic reservoir tank 52. This enables the amount of molten waste plastic remaining in the reactor shells 12, 14 to be controlled, thereby causing the predetermined amount of waste plastic relative to the feeding amount of waste plastic to be discharged.

A pyrolytic reactor having a configuration as described above operates in the following manner.

Crushed waste plastic from which hydrogen chloride and foreign objects have been physically removed is fed into the hopper 24, as indicated by the arrow in Fig. 2, and agitated therein before it is further fed into the first reactor shell 12 through the waste plastic inlet port 32 at a predetermined rate. The waste plastic fed into the first reactor shell 12 is then mixed with molten plastic flowing into the first reactor shell 12 through the returning port 42 by way of the molten plastic returning tube 38 and heated from the ambient temperature to about 250° C, at which temperature it also becomes molten. The molten and mixed waste plastic is guided in the longitudinal direction along the inside of the first reactor shell 12 toward the pyrolyzed gas outlet port 34 of the first reactor shell 12 by the rotary motion of the hatchet-like blades 46, while being heated from the outside of the first reactor shell 12 by the outside heating means. The molten plastic heated to about 300° C to 340° C is sufficiently stirred and kneaded by the rotating hatchet-like blades 46 to produce an even and uniform temperature distribution therein, which in turn accelerates the pyrolysis of waste plastic. The hydrogen chloride generated by the reaction flows out through the pyrolyzed gas outlet ports 33, 34 and is fed to and processed by a hydrochloric acid recovery apparatus (not shown), as indicated by the arrow B in Fig. 2.

On the other hand, molten waste plastic flows into the second reactor shell 14 through the waste plastic draw tube 36 and is guided in the direction opposite to the one in which it is guided in the first reactor shell 12 by, as in the case in the first reactor shell 12, the rotation of the hatchet-like blades 46, while being heated by the outside heating means, to then reach the back end of the first reactor shell 12 through the waste plastic returning tube 38. At this stage, the dechlorinated molten plastic flows out of the molten waste plastic outlet port through part of the waste plastic returning tube 38 and the molten waste plastic discharge tube 48. In order to produce oil from the collected molten plastic, the molten plastic has to be further pyrolyzed before it is transported to a post-process station. On the other hand, the collected molten plastic may simply be cooled and solidified. Upon above-described processes being finished, the dechlorination treatment of the waste plastic is completed.

While the present invention has been described by way of its embodiments, a pyrolytic reactor according to the invention is not limited to the treatment of fluffy waste plastic but is also applicable to pellet-like or crushed pieces of waste plastic.

As described above, a pyrolytic reactor according to the invention can mix molten waste plastic with fluffy solid waste plastic initially introduced therein to make the fluidic state of the waste plastic good from the on-set of the introduction of the fluffy solid waste plastic, thereby causing an effective heat transfer area to be secured, while at the same time overcoming the problems associated with the guiding of the waste plastic, irrespective of the peculiar characteristics of the waste plastic, that is, high viscous and low heat transfer characteristic. In addition, the molten waste plastic forcibly removes the air film attached to the surface of the introduced waste plastic, whereby low temperature corrosion is prevented, while at the same time continous and efficient pyrolytic reaction of the waste plastic can be achieved without needing to lengthen the reactor shell by changing the heating method of the waste plastic.

## Claims

1. A pyrolytic reactor for waste plastic comprising:
a pair of reactor shells each having a guiding means for guiding the waste plastic longitudinally and an external heating means for heating the waste plastic from outside, and
a waste plastic drawing tube which connects a front end portion of one of the reactor shells to a back end portion of the other one of the reactor shells and a waste plastic return tube which connects a back end portion of the one of the reactor shells to a front end portion of the other one of the reactor shells,
the direction in which the waste plastic is guided by the guiding means of the one reactor shell being opposite to the direction in which the waste plastic is guided by the guiding means of the other shell,
the pair of the reactor shells cooperating with the waste plastic drawing and return tubes to form a circulating flow path for the waste plastic,
the one of the reactor shells having a waste plastic inlet port at its back end portion.

2. A pyrolytic reactor according to claim 1 wherein the one of the reactor shells is disposed above the other of the reactor shells.

3. A pyrolytic reactor according to claim 1 or 2, further having a molten waste plastic drawing tube, a draw port of which is disposed below the one of the reactor shells, the level of the molten waste plastic drawing tube relative to that of the one of the reactor shells being controllable.
